# EUROPEAN PATENT SPECIFICATION

(11) **EP 2 554 370 B1**
(45) Date of publication and mention of the grant of the patent: **11.10.2017**
(21) Application number: 11763027.7
(22) Date of filing: 30.03.2011
(51) Int. Cl.: B32B 27/12, B32B 27/06, B32B 13/12, B32B 21/08

(54) **BOARD COMPLEX HAVING A PLA COVER**
PLATTENKOMPLEX MIT EINER POLYMILCHSÄURE-ABDECKUNG
PANNEAU COMPLEXE AYANT UNE COUVERTURE DE PLA

(30) Priority: 31.03.2010 KR 20100029533
(43) Date of publication of application: 06.02.2013
(73) Proprietor: LG Hausys, Ltd., Seoul 150-721 (KR)
(72) Inventor: KWON, Hyun-Jong, Ulsan 680-012 (KR); KIM, Ji-Young, Ulsan 680-796 (KR); PARK, Ki-Bong, Seoul 150-721 (KR); KANG, Chang-Won, Cheongju-si Chungcheongbuk-do 360-101 (KR); KWON, Jun-Hyuk, Gunpo-si Gyeonggi-do 435-725 (KR); PARK, Sang-Sun, Seoul 158-859 (KR); KIM, Jang-Ki, Cheongju-si Chungcheongbuk-do 361-271 (KR); LEE, Gyeong-Min, Ulsan 680-835 (KR); Huang, Cheng Zhe, Cheongju-si Chungcheongbuk-do 361-758 (KR)
(74) Representative: Prinz & Partner mbB
(86) International application number: PCT/KR2011/002191
(87) International publication number: WO 2011/122855

(56) References cited:
- WO-A1-97/37848
- JP-A- 11 207 873
- JP-A- 2009 178 880
- JP-A- 2010 052 305
- US-A1- 2008 026 171
- US-A1- 2008 026 235
- US-A1- 2008 241 509
- US-A1- 2008 317 983
- US-A1- 2009 324 901
- US-A1- 2010 028 654

## Description

### [Technical Field]

The present invention relates to a board complex having a PLA cover and a method of forming a board complex using an environmentally friendly resin such as PLA.

### [Background Art]

Flooring materials used for buildings, such as houses, apartments, offices, and stores, are generally flooring materials based on petroleum resins such as polyvinyl chloride (PVC).

Flooring materials containing PVC are manufactured by extrusion or calendering of PVC resins. However, since PVC resins are derived from petroleum, a difficulty can occur in supply and demand of raw materials in the future due to the exhaustion of petroleum resources.

Further, PVC flooring materials generate a large amount of toxic substances in use or when discarded and thus need to be used less in view of environmental considerations.

Recently, green flooring materials based on environmentally friendly resins have received attention.

However, typical green flooring materials have low strength and are not suited to molding or processing. Moreover, such materials are likely to form a gap due to heat in

JP 2009 178 880 A discloses a polylactic acid-based single layer decorative sheet which can be used to cover a board.

### [Disclosure]

### [Technical Problem]

The present invention is directed to providing a board complex having a polylactic acid (PLA) cover, in which a cover film containing a PLA resin is joined to a material, such as medium-density fiberboard (MDF), plywood, asbestos-free cellulose fiber reinforced cement board, magnesium board, glued laminated timber, high density fiberboard (HDF), particle board, ceramic tile, porcelain tile, ceramic board, and click-fastened board, thereby realizing an environmentally friendly complex.

In addition, the present invention is directed to providing a board complex having a PLA cover, in which the PLA cover includes a dimensional stabilizing layer having a glass fiber-impregnated structure to secure dimensional stability against heating, or a chip inlaid layer including wood flour, chaff, or pine resin to provide more natural texture as compared with a conventional complex.

Further, the present invention is directed to providing a board complex having a PLA cover, in which the thermoplastic PLA cover is combined with a thermosetting board, thereby resolving the appearance of an uneven surface of a flooring material resulting from transfer of irregularity from a lower side of the flooring material, which is a drawback of thermoplastic flooring materials.

### [Technical Solution]

The present invention provides a board complex having a polylactic acid (PLA) cover, which includes: a cover member having at least one layer selected from a transparent layer, a printable layer having a print, a chip inlaid layer, a non-foamed layer, and a foamed layer, and comprising a PLA resin; and a bonding layer and a board formed under the cover member and a surface treatment layer formed over the cover member, the cover member comprising a stacked structure of a transparent layer and a printable layer having a print, or a stacked structure of a transparent layer and a dimensional stabilizing layer having a print, or a chip inlaid layer, wherein the transparent layer, the printable layer, the dimensional stabilizing layer and the chip inlaid layer comprises the PLA resin as binder. The board may be selected from medium-density fiberboard (MDF), plywood, asbestos-free cellulose fiber reinforced cement board, magnesium board, glued laminated timber, high density fiberboard (HDF), particle board, ceramic tile, porcelain tile, ceramic board, and click-fastened board. The surface treatment layer may include polyurethane, polyurethane acrylate, or wax. Here, the cover member refers to any resin layer containing the PLA resin except for the bonding layer, the board, and the surface treatment layer.

The cover member may further include a dimensional stabilizing layer under the printable layer or the chip inlaid layer, wherein the dimensional stabilizing layer includes at least one resin impregnated with glass fiber, the at least one resin being selected from acrylic resins, melamine resins, and PLA resins. The glass fiber has a mass per unit area of 30 to 150 g/m². The dimensional stabilizing layer may further include at least one of 40 to 150 parts by weight of a non-phthalate plasticizer, 30 parts by weight or less of a viscosity lowering agent, 150 parts by weight or less of calcium carbonate, and 20 parts by weight or less of titanium dioxide, based on 100 parts by weight of the resin.

The transparent layer may include 5 to 50 parts by weight of a non-phthalate plasticizer and 0.1 to 20 parts by weight of processing aids based on 100 parts by weight of the PLA resin. The transparent layer may further include at least one of 0.01 to 10 parts by weight of higher fatty acid as a lubricant, 0.01 to 10 parts by weight of a chain extender, and 10 parts by weight or less of an anti-hydrolysis agent based on 100 parts by weight of the PLA resin.

The printable layer may include 5 to 60 parts by weight of a non-phthalate plasticizer and 0.1 to 20 parts by weight of processing aids based on 100 parts by weight of the PLA resin. The printable layer may further include at least one of 0.01 to 10 parts by weight of higher fatty acid as a lubricant, 0.01 to 10 parts by weight of a chain extender, 10 parts by weight or less of an anti-hydrolysis agent, 100 parts by weight or less of calcium carbonate (CaCO₃), and 50 parts by weight or less of titanium dioxide (TiO₂), based on 100 parts by weight of the PLA resin.

The chip inlaid layer may further include at least one of a non-phthalate plasticizer, an acrylic copolymer as processing aids, and an anti-hydrolysis agent in addition to the PLA resin. The acrylic copolymer may have a weight average molecular weight (Mw) of 800,000 to 6,000,000. The anti-hydrolysis agent may include carbodiimide and oxazoline.

The chip inlaid layer may further include at least one of 5 to 100 parts by weight of the non-phthalate plasticizer, 0.1 to 20 parts by weight of the acrylic copolymer, 0.01 to 10 parts by weight of at least one of stearic acid and higher fatty acid as a lubricant, 10 parts by weight or less of the anti-hydrolysis agent, 200 parts by weight or less of at least one of wood flour and chaff, 500 parts by weight or less of CaCO₃, 50 parts by weight or less of TiO₂, and 20 parts by weight or less of pine resin, based on 100 parts by weight of the PLA resin.

The non-foamed layer may include at least one of 5 to 60 parts by weight of a non-phthalate plasticizer, 0.1 to 20 parts by weight of an acrylic copolymer, 0.01 to 10 parts by weight of at least one of stearic acid and higher fatty acid as a lubricant, 10 parts by weight or less of an anti-hydrolysis agent, 200 parts by weight or less of at least one of wood flour and chaff, 300 parts by weight or less of CaCO₃, 5 parts by weight or less of TiO₂, and 20 parts by weight or less of pine resin, based on 100 parts by weight of the PLA resin.

The board may be subjected to a tongue and groove (T/G) process.

The bonding layer may include at least one selected from an epoxy resin, a urethane resin, a vinyl acetate resin, and an acrylic resin. The bonding layer may have a thickness of 0.01 to 0.5 mm.

The print may be formed on an upper side of the printable layer. The print may be formed by gravure printing, offset printing, rotary screen printing or inkjet printing.

The transparent layer may have a thickness of 0.1 to 1 mm, the printable layer has a thickness of 0.05 to 0.5 mm, the chip inlaid layer may have a thickness of 0.3 to 3.0 mm, the non-foamed layer may have a thickness of 0.2 to 2.0 mm, the foamed layer may have a thickness of 0.5 to 20.0 mm, the dimensional stabilizing layer may have a thickness of 0.1 to 1.0 mm, and the surface treatment layer may have a thickness of 0.01 to 0.1 mm.

Another aspect of the present invention provides a board complex having a polylactic acid (PLA) cover including: a cover member having at least one layer containing a PLA resin; and a board formed under the cover member.

The board complex may further include a dimensional stabilizing layer under the printable layer.

The board complex may further include a non-foamed layer formed on the bonding layer and further includes a foamed layer between the bonding layer and the non-foamed layer. The board complex may further include a foamed layer on the bonding layer and further includes a non-foamed layer between the bonding layer and the foamed layer.

Yet another aspect of the present invention provides a board complex having a PLA cover including a surface treatment layer, a chip inlaid layer having a print, a bonding layer, and a board from the top of the board complex, wherein the chip inlaid layer includes a PLA resin as a binder.

The board complex further may include at least one of a foamed layer, a non-foamed layer, a dimensional stabilizing layer, and woven fabrics under the chip inlaid layer, wherein the foamed layer is formed on the non-foamed layer. The board complex may further include a dimensional stabilizing layer under the chip inlaid layer, the board complex may further include a non-foamed layer on the dimensional stabilizing layer, the board complex may further include a non-foamed layer under the chip inlaid layer, the board complex may further include a foamed layer under the chip inlaid layer, and the board complex may further include woven fabrics on the bonding layer.

### [Advantageous Effects]

According to one embodiment of the invention, a PLA resin, based on plant resources is employed instead of PVC derived from petroleum resources, thereby solving a problem regarding the supply and demand of raw materials.

In addition, according to one embodiment of the invention, the board complex provides environmentally friendliness and guarantees dimensional stability against heating through a dimensional stabilizing layer having a glass fiber-impregnated structure while improving nature texture through a chip inlaid layer including wood flour, chaff, or pine resin.

Further, according to another embodiment of the invention, a thermoplastic PLA cover is combined with a thermosetting board, thereby resolving the appearance of an uneven surface of a flooring material resulting from transfer of irregularity from a lower side of the flooring material, which is a drawback of thermoplastic flooring materials.

### [Description of Drawings]

Fig. 1 is a side-sectional view of a board complex having a polylactic acid (PLA) cover according to a first embodiment of the present invention;
Fig. 2 is a side-sectional view of a board complex having a PLA cover according to a second embodiment of the present invention;
Fig. 3 is a side-sectional view of a board complex having a PLA cover according to a third embodiment of the present invention;
Fig. 4 is a side-sectional view of a board complex having a PLA cover according to a fourth embodiment of the present invention;
Fig. 5 is a side-sectional view of a board complex having a PLA cover according to a fifth embodiment of the present invention; and
Fig. 6 is a side-sectional view of a board complex having a PLA cover according to a sixth embodiment of the present invention.

### [Mode for Invention]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are given to provide complete disclosure of the invention and to provide a thorough understanding of the invention to those skilled in the art. The scope of the invention is defined only by the claims. Like components will be denoted by like reference numerals throughout the specification.

Hereinafter, board complexes having a polylactic acid (PLA) cover according to exemplary embodiments of the present invention will be described in detail with reference to the accompanying drawings.

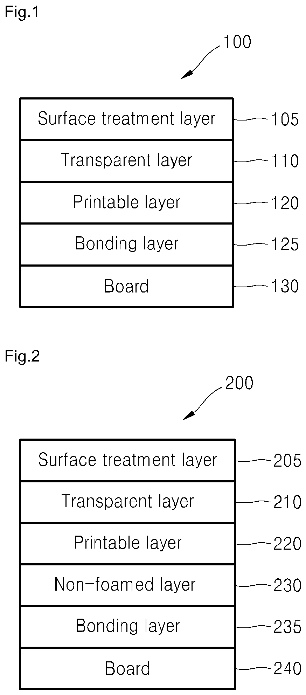

Fig. 1 is a side-sectional view of a board complex having a PLA cover 100 according to a first embodiment of the present invention.

Referring to Fig. 1, the board complex 100 includes a surface treatment layer 105, a transparent layer 110, a printable layer 120, a bonding layer 125, and a board 130 from the top.

Here, at least one of the transparent layer 110 and the printable layer 120 includes a PLA resin.

Alternatively, the board complex may omit the surface treatment layer 105.

In addition, the board 130 may be selected from medium-density fiberboard (MDF), plywood, asbestos-free cellulose fiber reinforced cement board, magnesium board, glued laminated timber, high density fiberboard (HDF), particle board, ceramic tile, porcelain tile, ceramic board, and click-fastened board to form various building materials.

In some embodiments, a tongue and groove (T/G) board may be used. However, there is no particular limitation as to the form of the board 130. The board 130 is not limited to the aforementioned materials, and various forms of boards may be employed for different areas such as interior/exterior materials or flooring materials for buildings.

Here, the PLA resin included in a cover member is thermoplastic polyester of lactide or lactic acid, which can be prepared by polymerization of lactic acid obtained by fermentation of starch extracted from renewable plant resources, such as corn and potato. The PLA resin is an environmentally friendly material in that it discharges remarkably less harmful substances to the environment, e.g., CO2, in use or when discarded than petroleum-based materials, e.g., polyvinyl chloride (PVC), and is easily degradable in the nature in discarding.

The PLA resin may be generally classified into D-PLA, L-PLA, D,L-PLA, and meso-PLA. In some embodiments, various PLA resins may be used alone or as mixtures without being particularly limited to a certain kind of PLA resin.

As described above, the PLA resin may be prepared by polymerization of lactic acid or lactide. As needed, the PLA resin may be prepared by copolymerization of lactic acid or lactide with a proper copolymer, such as glycol compounds, e.g., ethylene glycol and propylene glycol, dicarboxylic acid, e.g., ethanedioic acid and terephthalic acid, hydroxycarbonic acid, e.g., glycolic acid and 2-hydroxybenzoic acid, and lactones, e.g., caprolactone and propiolactone.

In some embodiments, the PLA resin may also be used in the form of a blend with other resins, e.g., synthetic resins. To process the PLA resin, the following plasticizers may be used.

First, non-phthalate plasticizers soften the PLA resin to improve thermoplasticity, facilitating molding at high temperature. In one embodiment, a non-phthalate plasticizer, particularly, acetyl tributyl citrate (ATBC), may be used.

Here, if the non-phthalate plasticizer is added in an amount less than a threshold level based on 100 parts by weight of the PLA resin, hardness of the PLA resin may increase, thereby reducing processability. If the non-phthalate plasticizer is added in an amount greater than a predetermined range in each layer, compatibility with other components forming each layer decreases, thereby deteriorating physical properties including processability.

Next, an acrylic copolymer may be used as processing aids.

The acrylic copolymer serves to reinforce the PLA resin having poor intrinsic melt strength or heat resistance to secure processability upon melt extrusion. Further, test results show that the acrylic copolymer may be useful for calendaring and pressing of the PLA.

If the acrylic copolymer is present in an amount less than a threshold level based on 100 parts by weight of the PLA resin, the melt efficiency and melt strength of the PLA resin cannot sufficiently improve. If the acrylic copolymer is present in an amount greater than the threshold level, manufacturing costs of layers constituting a flooring material may be increased, and overall physical properties can deteriorate due to inappropriate compatibility with other components forming each layer.

The acrylic copolymer may have, without being particularly limited to, a weight average molecular weight (Mw) of 800,000 to 6,000,000 in view of improvement in melt strength during processing and compatibility with other components.

Next, the PLA resin may further include a lubricant to prevent accumulation of deposits or crosslinked products in melt extrusion.

The lubricant makes the surface of metal equipment, such as a calender roller, smooth to improve fluidity in molding a resin composition of the present invention, prevents adhesion of a resin to the metal equipment, improves slippage, and adjusts melt viscosity, thereby optimizing molding processability, particularly calendaring molding processability.

Although there are various kinds of lubricants, eco-friendly lubricants, e.g., higher fatty acids, may be adopted in some embodiments of the invention, specifically, a saturated fatty acid with an 18 carbon chain, such as stearic acid, or higher fatty acids, may be used alone or as mixtures.

If the lubricant is present in an amount less than a threshold level based on 100 parts by weight of the PLA resin, the lubricant does not work effectively. If the lubricant is present in an amount greater than a threshold level based on 100 parts by weight of the PLA resin, the PLA resin can deteriorate in impact resistance, heat resistance, and gloss.

Further, in order to prevent decrease in mechanical properties of the PLA resin including impact resistance through hydrolysis, the PLA resin may further include an anti-hydrolysis agent. The anti-hydrolysis agent may include carbodiimide or oxazoline.

If the anti-hydrolysis agent is present in an amount greater than a threshold level based on 100 parts by weight of the PLA resin, molding processability can deteriorate.

As described above, according to the present invention, there is no particular restriction as to a method of manufacturing the PLA cover member using calendering. For example, the method may include preparing a resin composition by mixing the aforementioned components, kneading and uniformly gelating the resin composition by heating and pressing under suitable conditions, and calendering molding the resin composition into a final cover member.

Here, mixing and kneading the components may be carried out, for example, on liquid or powdery raw materials using a super mixer, extruder, kneader, 2- or 3-roll. Further, the mixing and kneading processes may be repeatedly performed in stages so as to efficiently mix the components such that the mixed components are kneaded at about 120 to 200°C using a Banbury mixer, and the kneaded components are subjected to primary mixing and secondary mixing at about 120 to 200°C using a 2-roll.

Also, there is no particular restriction as to a method of manufacturing each layer, which involves subjecting the mixed components to calendaring. For example, each layer may be formed using a general device, e.g., a four roll inverted "L" calender.

Calendering conditions may be suitably adjusted in consideration of compositions of a used resin composition. For example, calendering may be carried out at a temperature ranging from about 120 to about 200°C.

The board complex according to the present invention may be modified variously based on the foregoing configuration, examples of which will be illustrated as follows.

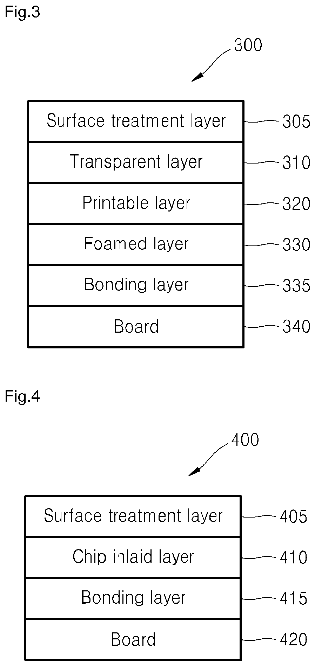

Fig. 2 is a side-sectional view of a board complex having a PLA cover 200 according to a second embodiment of the present invention, and Fig. 3 is a side-sectional view of a board complex having a PLA cover 300 according to a third embodiment of the present invention.

The board complex of Fig. 2 further includes a non-foamed layer 230 disposed between a printable layer 220 having a print and a board 240, and the board complex of Fig. 3 further includes a foamed layer 330 disposed between a printable layer 320 having a print and a board 340. Here, the non-foamed layer 230 and the foamed layer 330 may also contain a PLA resin, which is described in detail below.

First, transparent layers 110, 210, 310 may include 5 to 50 parts by weight of a non-phthalate plasticizer and 0.1 to 20 parts by weight of processing aids, based on 100 parts by weight of the PLA resin.

Here, the transparent layers 110, 210, 310 may further include at least one of 0.01 to 10 parts by weight of higher fatty acid as a lubricant, 0.01 to 10 parts by weight of a chain extender, and 10 parts by weight or less of an anti-hydrolysis agent, based on 100 parts by weight of the PLA resin.

Next, printable layers 120, 220, and 320 may include 5 to 60 parts by weight of a non-phthalate plasticizer and 0.1 to 20 parts by weight of processing aids, based on 100 parts by weight of the PLA resin.

Here, the printable layers 120, 220, and 320 may further include at least one of 0.01 to 10 parts by weight of higher fatty acid as a lubricant, 0.01 to 10 parts by weight of a chain extender, 10 parts by weight or less of an anti-hydrolysis agent, 100 parts by weight or less of calcium carbonate (CaCO₃), and 50 parts by weight or less of titanium dioxide (TiO₂), based on 100 parts by weight of the PLA resin.

Further, printing may be performed by a method selected from gravure printing, offset printing, rotary screen printing, and inkjet printing.

Here, a threshold level of the amount of each component is based on the method of manufacturing the PLA layer of Fig. 1. If each component is added in an amount out of the above ranges, molding processability and combining strength with other components can decrease.

Next, the non-foamed layer 230 may include 5 to 60 parts by weight of a non-phthalate plasticizer, 0.1 to 20 parts by weight of an acrylic copolymer, 0.01 to 10 parts by weight of at least one of stearic acid and higher fatty acid as a lubricant, 10 parts by weight or less of an anti-hydrolysis agent, 200 parts by weight or less of at least one of wood flour and chaff, 300 parts by weight or less of CaCO₃, 5 parts by weight or less of TiO₂, and 20 parts by weight or less of pine resin, based on 100 parts by weight of the PLA resin.

The foamed layer may be formed in the same manner as the method of manufacturing the transparent layers, the printable layers, and the non-foamed layer except that a foaming agent is added.

However, methods and materials for the foamed layer are not limited to the aforementioned examples and any material for a processing method including the PLA resin may be employed.

For example, the foamed layer may be prepared from a resin composition including 0.5 to 20 parts by weight of processing aids, 25 to 45 parts by weight of a plasticizer, and 5 to 60 parts by weight of a filler (e.g., CaCO₃), based on 100 parts by weight of the PLA resin. In this case, the resin composition may include a suitable amount of a foaming agent for a foaming process.

According to another embodiment, a chip inlaid layer or a chip inlaid layer having a print may be formed instead of the printable layers, which will be described in detail hereinafter.

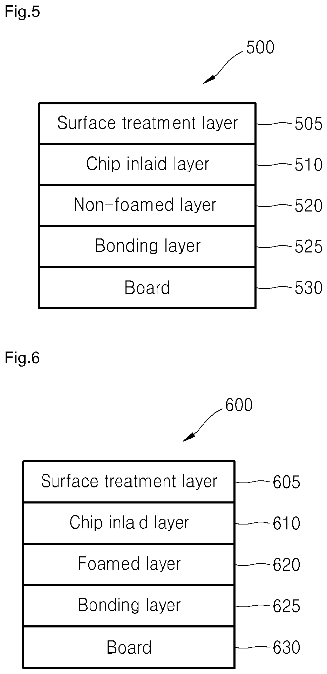

Fig. 4 is a side-sectional view of a board complex having a PLA cover 400 according to a fourth embodiment of the present invention, Fig. 5 is a side-sectional view of a board complex having a PLA cover 500 according to a fifth embodiment of the present invention, and Fig. 6 is a side-sectional view of a board complex having a PLA cover 600 according to a sixth embodiment of the present invention.

First, Fig. 4 shows an example including a surface treatment layer 405, a chip inlaid layer 410, a bonding layer 415, and a board 420.

Fig. 5 shows an example including a surface treatment layer 505, a chip inlaid layer 510, a non-foamed layer 520, a bonding layer 525, and a board 530, wherein the non-foamed layer 520 is disposed between the chip inlaid layer 510 and the bonding layer 525. Here, a foamed layer (not shown) may be further formed on the non-foamed layer 520.

Fig. 6 shows an example including a surface treatment layer 605, a chip inlaid layer 610, a foamed layer 620, a bonding layer 625, and a board 630, wherein the foamed layer 620 is formed on the bonding layer 625. Here, a non-foamed layer (not shown) may be further formed on the foamed layer 620.

In all of the foregoing examples, the chip inlaid layers 410, 510, 610 may be replaced by a chip inlaid layer having a print.

Further, a dimensional stabilizing layer may be further formed on the non-foamed layer 520, and woven fabrics may be further formed under the foamed layer 620.

Here, the woven fabrics may include T/C plain weave fabrics or knits. As yearns for the woven fabrics, 100-percent pure cotton, polyester, and polyester-nylon blended yarns may be used.

First, the chip inlaid layers 410, 510, 610 will be described.

The chip inlaid layers 410, 510, 610 according to the present invention may have a chip shape with a natural marble appearance and may be formed in various shapes.

The chip inlaid layers may be prepared as follows. A PLA resin and wood flour are processed into a sheet-shaped product, which is then pulverized into chips. Then, the chips are placed in a raw material including a PLA resin, followed by caldendering, thereby producing a sheet-shaped product.

Alternatively, the chip inlaid layers may not include separate chips instead of being prepared by processing a raw material including a PLA resin and chip-like wood flour into a sheet-shaped product by calendering. The chip inlaid layers may appear to have chips embedded therein, when viewed from the surface of a flooring material.

Further, the chip inlaid layers may be prepared as follows: a PLA resin and wood flour are processed into a sheet-shaped product, which is then pulverized into chips, and the chips are arranged on a glass fiber impregnation layer 130 and then subjected to rolling, or are arranged on a separate sheet of a PLA resin and then subjected to rolling.

To realize such configurations, in one embodiment, the chip inlaid layers 410, 510, 610 may further include at least one of acetyl tributyl citrate (ATBC) as a non-phthalate plasticizer, an acrylic copolymer as processing aids, and an anti-hydrolysis agent in addition to the PLA resin.

Each of the chip inlaid layers 110 may include at least one of 5 to 100 parts by weight of a non-phthalate plasticizer, 0.1 to 20 parts by weight of an acrylic copolymer, 0.01 to 10 parts by weight of at least one of stearic acid and higher fatty acid as a lubricant, 10 parts by weight or less of an anti-hydrolysis agent, 200 parts by weight or less of at least one of wood flour and chaff, 500 parts by weight or less of CaCO₃, 50 parts by weight or less of TiO₂, and 20 parts by weight or less of pine resin, based on 100 parts by weight of the PLA resin.

Here, the acrylic copolymer may be used in the chip inlaid layer 110 in an amount of 0.1 to 20 parts by weight based on 100 parts by weight of the PLA resin.

The lubricant may be used in the chip inlaid layer 110 in an amount of 0.01 to 10 parts by weight based on 100 parts by weight of the PLA resin.

The anti-hydrolysis agent may be added to the chip inlaid layer 110 in an amount of 10 parts by weight or less based on 100 parts by weight of the PLA resin.

Here, CaCO₃ functions as reinforcing inorganic fillers in the chip inlaid layer. Further, TiO₂ may be added as a white pigment for aesthetic purposes, and at least one of wood flour and chaff, and pine resin may be further added to impart the natural texture and smell of wood.

Here, the more wood flour, chaff, or pine resin is added, the more effective are visual impressions and the more natural are the texture and smell of wood. However, if the wood flour, the chaff, or the pine resin is added in an amount greater than the abovementioned range, combining strength of other components decreases, deteriorating overall processability of the PLA resin.

Moreover, although not shown in the drawings, a transparent layer or printable layer containing a PLA resin may be further formed on the chip inlaid layer, and the non-foamed layer and the foamed layer may also include a PLA resin.

In addition, a surface treatment layer may be applied to the upper surface of the board complexes having the PLA cover according to the embodiments in Figs. 1 to 6 to improve surface qualities, including scratch resistance and abrasion resistance, or to enhance contamination resistance to facilitate cleaning. Here, the surface treatment layer may include materials containing polyurethane, polyurethane acrylate, or wax.

Furthermore, a dimensional stabilizing layer may be provided under the pintable layer or the chip inlaid layer to supplement the dimensional stability of the board complexes.

The dimensional stabilizing layer according to the present invention serves to supplement the dimensional stability of the PLA resin. Flooring materials using a PLA resin encounter change in dimensions due to temperature change by heating, resulting in contraction, and accordingly cracks may occur in connected parts between flooring materials. Thus, the dimensional stabilizing layer is provided to secure dimensional stability, thus preventing flooring materials from cracking.

The dimensional stabilizing layer of the present invention has a glass fiber-impregnated structure. That is, an acrylic resin impregnated with glass fiber is used as the dimensional stabilizing layer.

Here, the glass fiber may have a mass per unit area of 30 to 150 g/m². If the mass per unit area of the glass fiber is less than 30 g/m², insufficient reinforcement of dimensional stability can be exhibited. If the mass per unit area of the glass fiber is greater than 150 g/m², adhesion between the chip inlaid layer and the dimensional stabilizing layer can decrease.

Further, the dimensional stabilizing layer may further include at least one of ATBC as a plasticizer, a viscosity lowering agent, calcium carbonate as inorganic fillers for reducing production costs, and titanium dioxide as a white pigment in addition to an acrylic resin.

Here, ATBC may be added in an amount of 40 to 150 parts by weight based on 100 parts by weight of the acrylic resin, the viscosity lowering agent may be added in an amount of 30 parts by weight or less, calcium carbonate may be added in an amount of 150 parts by weight or less, and titanium dioxide may be added in an amount of 20 parts by weight or less.

If the amount of ATBC is less than 40 parts by weight based on 100 parts by weight of the acrylic resin, hardness of the dimensional stabilizing layer can increase, reducing processability. If the amount of ATBC is greater than 150 parts by weight, dimensional stability can deteriorate due to inappropriate compatibility with other components.

If the amount of the viscosity lowering agent is greater than 30 parts by weight based on 100 parts by weight of the acrylic resin, viscosity excessively decreases, thereby deteriorating moldability. If calcium carbonate and titanium dioxide are present above the above ranges, adhesion to other components may decrease, deteriorating processability.

Based on the foregoing aspects, the thickness of each layer may range as follows. The bonding layer may have a thickness of 0.01 to 0.5 mm; the transparent layer, 0.1 to 1 mm; the printable layer, 0.05 to 0.5 mm; the inlaid layer, 0.3 to 3.0 mm; the non-foamed layer, 0.2 to 2.0 mm; the foamed layer, 0.5 to 20.0 mm; the dimensional stabilizing layer, 0.1 to 1.0 mm; and the surface treatment layer, 0.01 to 0.1 mm.

If each layer has a thickness less than the set range, a complex becomes too thin and thus does not exhibit desired properties. If each layer has a thickness greater than the set range, a complex becomes thick, thus not suitably functioning.

Hereinafter, the present invention will be described in detail with reference to some examples of a transparent layer, a printable layer, a chip inlaid layer, a non-foamed layer, and a foamed layer which are commonly applied to the foregoing embodiments. These examples are provided for illustrative purposes only and are not to be in any way construed as limiting the present invention. A description of details apparent to those skilled in the art will be omitted herein.

### Preparative Examples

### Preparation of transparent layer

100 parts by weight of PLA resin, 2002D (melt index: less than 3, NatureWorks LLC), 20 parts by weight of ATBC, 10 parts by weight of an acrylic copolymer, 5 parts by weight of stearic acid, and 5 parts by weight of a carbodiimide were kneaded first using an extruder, kneaded at 140°C using a Banbury mixer, and then subjected to primary and secondary mixing using a 2-roll at 140°C. Then, the prepared raw material was subjected to calendaring at 130°C, thereby producing a sheet having a thickness of about 0.6 mm.

### Preparation of printable layer

A 0.2 mm thick sheet was prepared in the same manner as in the preparation of the transparent layer except that 100 parts by weight of 2002D, 30 parts by weight of ATBC, 10 parts by weight of an acrylic copolymer, 5 parts by weight of stearic acid, 5 parts by weight of diisocyanate, 5 parts by weight of a carbodiimide, 50 parts by weight of calcium carbonate, and 20 parts by weight of titanium dioxide were used.

The printable layer was deposited on a dimensional stabilizing layer and subjected to thermal lamination at 150°C to form a printable layer-dimensional layer, after which a pattern was formed on the surface of the printable layer by gravure printing.

### Preparation of chip inlaid layer

A sheet having a thickness of about 2.8 mm was prepared using 100 parts by weight of a PLA resin, 2002D (NatureWorks LLC), 40 parts by weight of ATBC, 10 parts by weight of an acrylic copolymer, 5 parts by weight of stearic acid, 5 parts by weight of a carbodiimide, 130 parts by weight of wood flour, 20 parts by weight of chaff, 280 parts by weight of calcium carbonate, 20 parts by weight of titanium dioxide, and 10 parts by of pine resin.

### Preparation of non-foamed layer

100 parts by weight of 2002D, 20 parts by weight of ATBC, 10 parts by weight of an acrylic copolymer, 5 parts by weight of stearic acid, 5 parts by weight of carbodiimide, 150 parts by weight of calcium carbonate, 130 parts by weight of wood flour, 30 parts by weight of chaff, 2 parts by weight of titanium dioxide, and 10 parts by weight of pine resin were kneaded first using an extruder, kneaded at 140°C using a Banbury mixer, and then subjected to primary and secondary mixing using a 2-roll at 140°C. Then, the prepared raw material was subjected to calendaring at 130°C, thereby producing a sheet having a thickness of about 1.4 mm.

### Preparation of dimensional stabilizing layer

100 parts by weight of an acrylic resin, 60 parts by weight of ATBC, 15 parts by weight of a viscosity lowering agent, 50 parts by weight of calcium carbonate, and 5 parts by weight of titanium dioxide were mixed to prepare an acrylic sol. The acrylic sol was impregnated with glass fiber (60 g/m²) using a roll coater, followed by drying at 140°C for 3 minutes, thereby obtaining a dimensional stabilizing layer having a thickness of about 0.6 mm.

### Preparation of surface treatment layer

The chip inlaid layer, the glass fiber-impregnated layer, and the non-foamed layer-other side fiber layer were subjected to thermal lamination using an embossing roll, after which a surface treatment layer was formed to a thickness of about 0.05 mm on the surface of the chip inlaid layer using wax, thereby producing a final cover material. In this example, the transparent layer, the printable layer, the chip inlaid layer, and the non-foamed layer were prepared based on the PLA resin.

As described above, in the board complex having the PLA cover according to the present invention, a PLA resin (or a mixture of the PLA resin and other resins) is used as a binder resin in forming a cover material, thereby exhibiting environmentally friendly properties as compared with the conventional cover material containing a PVC binder. Also, the cover material includes a printable layer, a chip inlaid layer, a dimensional stabilizing layer, a non-foamed layer, a foamed layer, and woven fabrics to secure sound-proof performance, buffering effect, and heat insulation, thus being employed widely as building materials.

Although some exemplary embodiments of the present invention have been described with reference to the accompanying drawings, the invention may be embodied in many different ways and should not be construed as being limited to the embodiments set forth herein. It will be understood by those skilled in the art that various modifications, changes, alterations, and equivalent embodiments can be made without departing from the spirit and scope of the invention. Therefore, it should be appreciated that the foregoing embodiments are provided for illustrative purposes only and are not to be in any way construed as limiting the present invention.

## Claims

1. A board complex having a polylactic acid (PLA) cover, comprising:
a cover member having at least one layer comprising a PLA resin, wherein the at least one layer is selected from a transparent layer, a printable layer having a print, a chip inlaid layer, a non-foamed layer, and a foamed layer; and
a bonding layer and a board formed under the cover member, and a surface treatment layer formed over the cover member
**characterized in that** the cover member comprises a stacked structure of a transparent layer and a printable layer having a print, or a stacked structure of a transparent layer and a dimensional stabilizing layer having a print, or a chip inlaid layer, wherein the transparent layer, the printable layer, the dimensional stabilizing layer and the chip inlaid layer comprises the PLA resin as a binder.

2. The board complex of claim 1, wherein the board is selected from medium-density fiberboard (MDF), plywood, asbestos-free cellulose fiber reinforced cement board, magnesium board, glued laminated timber, high density fiberboard (HDF), particle board, ceramic tile, porcelain tile, ceramic board, and click-fastened board.

3. The board complex of claim 1, wherein the cover member further comprises a dimensional stabilizing layer under the printable layer or the chip inlaid layer.

4. The board complex of claim 3, wherein the dimensional stabilizing layer comprises at least one resin impregnated with glass fiber, the at least one resin being selected from PLA resins.

5. The board complex of claim 4, wherein the glass fiber has a mass per unit area of 30 to 150 g/m².

6. The board complex of claim 3, wherein the dimensional stabilizing layer further comprises at least one of 40 to 150 parts by weight of a non-phthalate plasticizer, 30 parts by weight or less of a viscosity lowering agent, 150 parts by weight or less of calcium carbonate, and 20 parts by weight or less of titanium dioxide, based on 100 parts by weight of the resin.

7. The board complex of claim 1, wherein the transparent layer comprises 5 to 50 parts by weight of a non-phthalate plasticizer and 0.1 to 20 parts by weight of processing aids based on 100 parts by weight of the PLA resin.

8. The board complex of claim 1, wherein the printable layer comprises 5 to 60 parts by weight of a non-phthalate plasticizer and 0.1 to 20 parts by weight of processing aids based on 100 parts by weight of the PLA resin.

9. The board complex of claim 1, wherein the chip inlaid layer further comprises at least one of a non-phthalate plasticizer, an acrylic copolymer as processing aids, and an anti-hydrolysis agent in addition to the PLA resin.

10. The board complex of claim 1, wherein the non-foamed layer comprises at least one of 5 to 60 parts by weight of a non-phthalate plasticizer, 0.1 to 20 parts by weight of an acrylic copolymer, 0.01 to 10 parts by weight of at least one of stearic acid and higher fatty acid as a lubricant, 10 parts by weight or less of an anti-hydrolysis agent, 200 parts by weight or less of at least one of wood flour and chaff, 300 parts by weight or less of CaCO₃, 5 parts by weight or less of TiO₂, and 20 parts by weight or less of pine resin, based on 100 parts by weight of the PLA resin.

11. The board complex of claim 1, wherein the board is subjected to a tongue and groove (T/G) process.

12. The board complex of claim 1, wherein the bonding layer comprises at least one selected from epoxy resins, urethane resins, vinyl acetate resins, and acrylic resins.

13. The board complex of claim 1, wherein the print is formed on an upper side of the printable layer.

## Patentansprüche

1. Plattenkomplex mit einer Polymilchsäure (PLA)-Beschichtung, der Folgendes umfasst:
ein Abdeckelement mit mindestens einer Schicht aus einem PLA-Harz, wobei die mindestens eine Schicht aus einer transparenten Schicht, einer bedruckbaren Schicht mit einem Druckmuster, einer Chip-Inlay-Schicht, einer nicht geschäumten Schicht und einer geschäumten Schicht ausgewählt ist; und
eine Haftschicht und eine Platte unter dem Abdeckelement sowie eine über dem Abdeckelement ausgebildete Oberflächenbehandlungsschicht,
**dadurch gekennzeichnet, dass** das Abdeckelement eine Stapelstruktur aus einer transparenten Schicht und einer bedruckbaren Schicht mit einem Druckmuster oder eine Stapelstruktur aus einer transparenten Schicht und einer Dimensionsstabilisierungsschicht mit einem Druckmuster oder eine Chip-Inlay-Schicht umfasst, wobei die transparente Schicht, die bedruckbare Schicht, die Dimensionsstabilisierungsschicht und die Chip-Inlay-Schicht das PLA-Harz als Bindemittel umfassen.

2. Plattenkomplex nach Anspruch 1, wobei die Platte aus einer mitteldichten Faserplatte (MDF), Sperrholz, einer asbestfreien, cellulosefaserverstärkten Zementplatte, einer Magnesiumplatte, Brettschichtholz, einer hochdichten Faserplatte (HDF), einer Spanplatte, einer Keramikfliese, einer Porzellanfliese, einer Keramikplatte und einer Klickverbindungsplatte ausgewählt ist.

3. Plattenkomplex nach Anspruch 1, wobei das Abdeckelement weiterhin eine Dimensionsstabilisierungsschicht unter der bedruckbaren Schicht oder der Chip-Inlay-Schicht umfasst.

4. Plattenkomplex nach Anspruch 3, wobei die Dimensionsstabilisierungsschicht mindestens ein mit Glasfaser imprägniertes Harz umfasst, wobei das mindestens eine Harz aus PLA-Harzen ausgewählt ist.

5. Plattenkomplex nach Anspruch 4, wobei die Glasfaser ein Flächengewicht von 30 bis 150 g/m² aufweist.

6. Plattenkomplex nach Anspruch 3, wobei die Dimensionsstabilisierungsschicht weiterhin mindestens einen von 40 bis 150 Gewichtsteilen eines Nicht-Phthalat-Weichmachers, 30 Gewichtsteilen oder weniger eines Viskositätssenkers, 150 Gewichtsteilen oder weniger Calciumcarbonat und 20 Gewichtsteilen oder weniger Titandioxid, bezogen auf 100 Gewichtsteile des Harzes, umfasst.

7. Plattenkomplex nach Anspruch 1, wobei die transparente Schicht 5 bis 50 Gewichtsteile eines Nicht-Phthalat-Weichmachers und 0,1 bis 20 Gewichtsteile Verarbeitungshilfsmittel, bezogen auf 100 Gewichtsteile des PLA-Harzes, umfasst.

8. Plattenkomplex nach Anspruch 1, wobei die bedruckbare Schicht 5 bis 60 Gewichtsteile eines Nicht-Phthalat-Weichmachers und 0,1 bis 20 Gewichtsteile Verarbeitungshilfsmittel, bezogen auf 100 Gewichtsteile des PLA-Harzes, umfasst.

9. Plattenkomplex nach Anspruch 1, wobei die Chip-Inlay-Schicht weiterhin mindestens einen von Nicht-Phthalat-Weichmacher, Acrylcopolymer als Verarbeitungshilfsmittel und Antihydrolysemittel zusätzlich zu dem PLA-Harz umfasst.

10. Plattenkomplex nach Anspruch 1, wobei die nicht geschäumte Schicht mindestens einen von 5 bis 60 Gewichtsteilen eines Nicht-Phthalat-Weichmachers, 0,1 bis 20 Gewichtsteilen eines Acrylcopolymers, 0,01 bis 10 Gewichtsteilen mindestens einer von Stearinsäure und höherer Fettsäure als Schmiermittel, 10 Gewichtsteilen oder weniger eines Antihydrolysemittels, 200 Gewichtsteilen oder weniger mindestens eines von Holzmehl und Häcksel, 300 Gewichtsteilen oder weniger CaCO₃, 5 Gewichtsteilen oder weniger TiO₂ und 20 Gewichtsteilen oder weniger Kiefernharz, bezogen auf 100 Gewichtsteile des PLA-Harzes, umfasst.

11. Plattenkomplex nach Anspruch 1, wobei die Platte einem Feder- und Nut (T/G)-Prozess unterzogen wird.

12. Plattenkomplex nach Anspruch 1, wobei die Haftschicht mindestens eines von Epoxidharzen, Urethanharzen, Vinylacetatharzen und Acrylharzen ist.

13. Plattenkomplex nach Anspruch 1, wobei das Druckmuster auf einer Oberseite der bedruckbaren Schicht ausgebildet ist.

## Revendications

1. Complexe de panneau présentant un revêtement en acide polylactique (PLA), comprenant :
un élément de revêtement présentant au moins une couche comprenant une résine de PLA, ladite au moins une couche étant choisie parmi une couche transparente, une couche imprimable présentant un motif d'impression, une couche d'incorporation de copeaux, une couche non-moussée et une couche moussée ; et
une couche d'adhésion et un panneau réalisé au-dessous de l'élément de revêtement ainsi qu'une couche de traitement de surface réalisée au-dessus de l'élément de revêtement,
**caractérisé en ce que** l'élément de revêtement comprend une structure d'empilement d'une couche transparente et d'une couche imprimable présentant un motif d'impression, ou une structure d'empilement d'une couche transparente et d'une couche de stabilisation dimensionnelle présentant un motif d'impression, ou d'une couche d'incorporation de copeaux, la couche transparente, la couche imprimable, la couche de stabilisation dimensionnelle et la couche d'incorporation de copeaux comprenant la résine de PLA en tant que liant.

2. Complexe de panneau selon la revendication 1, le panneau étant choisi parmi un panneau de fibres à densité moyenne (MDF), un contreplaqué, un panneau en ciment renforcé par fibres de cellulose et sans amiante, un panneau de magnésium, un bois lamellé collé, un panneau de fibres à densité élevée (HDF), un panneau de particules, un carreau en céramique, un carreau en porcelaine, un panneau en céramique et un panneau de liaison par encliquetage.

3. Complexe de panneau selon la revendication 1, l'élément de revêtement comprenant en outre une couche de stabilisation dimensionnelle au-dessous de la couche imprimable ou de la couche d'incorporation de copeaux.

4. Complexe de panneau selon la revendication 3, la couche de stabilisation dimensionnelle comprenant au moins une résine imprégnée de fibre de verre, ladite au moins une résine étant choisie parmi les résines de PLA.

5. Complexe de panneau selon la revendication 4, la fibre de verre présentant une masse surfacique de 30 à 150 g/m².

6. Complexe de panneau selon la revendication 3, la couche de stabilisation dimensionnelle comprenant en outre 40 à 150 parties en poids d'un plastifiant sans phtalate, 30 parties en poids ou moins d'un agent de réduction de viscosité, 150 parties en poids ou moins d'un carbonate de calcium et/ou 20 parties en poids ou moins de dioxyde de titane sur la base de 100 parties en poids de la résine.

7. Complexe de panneau selon la revendication 1, la couche transparente présentant 5 à 50 parties en poids d'un plastifiant sans phtalate et 0,1 à 20 parties en poids de produits auxiliaires de traitement sur la base de 100 parties en poids de la résine de PLA.

8. Complexe de panneau selon la revendication 1, la couche imprimable comprenant 5 à 60 parties en poids d'un plastifiant sans phtalate et 0,1 à 20 parties en poids de produits auxiliaires de traitement sur la base de 100 parties en poids de la résine de PLA.

9. Complexe de panneau selon la revendication 1, la couche d'incorporation de copeaux comprenant en outre un plastifiant sans phtalate, un copolymère acrylique en tant que produit auxiliaire de traitement et/ou un agent anti-hydrolyse en plus de la résine de PLA.

10. Complexe de panneau selon la revendication 1, la couche non-moussée comprenant 5 à 60 parties en poids d'un plastifiant sans phtalate, 0,1 à 20 parties en poids d'un copolymère acrylique, 0,01 à 10 parties en poids d'un acide stéarique et/ou d'un acide gras supérieur en tant que lubrifiant, 10 parties en poids ou moins d'un agent anti-hydrolyse, 200 parties en poids ou moins de farine de bois et/ou de paille hachée, 300 parties en poids ou moins de CaCO₃, 5 parties en poids ou moins de TiO₂ et/ou 20 parties en poids ou moins de résine de pin sur la base de 100 parties en poids de la résine de PLA.

11. Complexe de panneau selon la revendication 1, le panneau étant soumis à une procédure de réalisation de languette et rainure (T/G).

12. Complexe de panneau selon la revendication 1, la couche d'adhésion comprenant au moins une résine choisie parmi les résines époxyde, les résines d'uréthane, les résines d'acétate de vinyle et les résines acryliques.

13. Complexe de panneau selon la revendication 1, le motif d'impression étant réalisé sur une face supérieure de la couche imprimable.
